# EUROPÄISCHE PATENTSCHRIFT

(11) **EP 1 449 290 B1**
(45) Veröffentlichungstag und Bekanntmachung des Hinweises auf die Patenterteilung: **02.01.2008**
(21) Anmeldenummer: 02792603.9
(22) Anmeldetag: 21.11.2002
(51) Int. Cl.: H02K 55/04

(54) **SCHIFFSANTRIEB**
BOAT PROPULSION SYSTEM
SYSTEME DE PROPULSION D'UN BATEAU

(30) Priorität: 29.11.2001 DE 10158758
(43) Veröffentlichungstag der Anmeldung: 25.08.2004
(73) Patentinhaber: SIEMENS AKTIENGESELLSCHAFT, 80333 München (DE)
(72) Erfinder: RIES, Günter, 91056 Erlangen (DE); WACKER, Bernd, 91074 Herzogenaurach (DE)
(86) Internationale Anmeldenummer: PCT/DE2002/004284
(87) Internationale Veröffentlichungsnummer: WO 2003/047961

(56) Entgegenhaltungen:
- WO-A-00/13296
- WO-A-01/20750
- WO-A-01/51863
- US-A- 2 790 098
- US-A- 5 586 437
- BRUCE GAMBLE, JEFFREY GOLDMAN, ASC: "High Temperature Superconducting Motors and Generators for Submarines and Surface Ships" PROCEEDINGS NAVAL SYMPOSIUM ON ELECTRIC MACHINES, 28. - 31. Juli 1997, Seiten 275-282, XP008000614 Newport, Rhode Island, USA
- SHARKE P: "THE HUNT FOR COMPACT POWER" GEOPHYSICS, SOCIETY OF EXPLORATION GEOPHYSICISTS. TULSA, US, April 2000 (2000-04), Seite COMPLETE XP008000664 ISSN: 0016-8033
- WESSKALLNIES B: "EIN SCHIFFSANTRIEB MIT EINEM SUPRALEITENDEN FAHRMOTOR" JAHRBUCH DER SCHIFFBAUTECHNISCHEN GESELLSCHAFT, BERLIN, DE, Bd. 83, 1990, Seiten 375-382, XP002194070 ISSN: 0374-1222
- "SIEMENS-SCHOTTEL-PROPULSOR (SSP) THE PODDED ELECTRIC DRIVE WITH PERMANENTLY EXCITED MOTOR" SIEMENS-SCHOTTEL-PROPULSOR (SSP) THE PODDED ELECTRIC DRIVE WITH PERMANENTLY EXCITED MOTOR, XX, XX, 7. März 1997 (1997-03-07), Seiten A-B,1-24, XP000198528

## Beschreibung

Die Erfindung bezieht sich auf einen Schiffsantrieb mit zumindest einem Schiffspropeller, zumindest einem Elektromotor, mittels dem der zumindest eine Schiffspropeller antreibbar ist, und einer umrichtergespeisten Stromversorgung, mittels der der zumindest eine Elektromotor mit elektrischer Energie versorgbar ist und die zumindest eine Antriebsmaschine und zumindest einen davon angetriebenen Generator aufweist, wobei der zumindest eine Elektromotor und der zumindest eine Generator der Stromversorgung als Drehstrom-Synchronmaschinen ausgebildet sind.

Es sind dieselelektrische Schiffsantriebe bekannt, deren Stromversorgung an geeigneter Stelle im Schiffsrumpf untergebrachte Synchrongeneratoren aufweist, durch die ihrerseits umrichtergespeiste Synchron- oder auch Asynchronmotoren gespeist werden. Die die Schiffspropeller antreibenden Elektromotoren können beispielsweise als Innenbordmotoren angeordnet sein und die Schiffspropeller über Wellenanlagen antreiben.

Darüber hinaus sind Podantriebe bekannt, die einen in einer drehbaren Motorgondel angeordneten permanentmagneterregten Synchronmotor haben. Die Motorgondel ist außerhalb des Schiffsrumpfs angeordnet und kann mit einer oder zwei Schiffsschrauben ausgeführt sein. Die Verlustwärmeabführung aus dem Elektromotor folgt hier allein über die Außenfläche der Motorgondel an das Seewasser. Die Asynchronmotoren und Generatoren haben Luft-Wasser-Wärmetauscher.

Darüber hinaus sind aus der JP 63217968 und der JP 04304159 Schiffsantriebe für zwei Schiffspropeller bekannt, zu denen ein sogenannter "Homopolarmotor" gehört, der aus zwei über Bürsten von Gleichstrom gegenläufig durchflossenen Scheiben- oder Zylinderläufern besteht, in welchen im Feld einer supraleitenden Spule ein Drehmoment erzeugt wird.

Dokument XP 8 000 614 offenbart einen Schiffsantrieb mit Schiffspropeller, umrichtergespeistem Synchronmotor und Generator. Der Motor besitzt einen Rotor mit Hochtemperatur-Supraleiter (HTSL)-Wicklung in einem vakuumisolierten Kryostaten. Die Luftspalt-Drehstromwicklung des Stators weist Kupfer-Bündelleiter auf.

Ausgehend von dem vorstehend geschilderten Stand der Technik liegt der Erfindung die Aufgabe zugrunde, den eingangs geschilderten gattungsgemäßen Schiffsantrieb derart weiterzubilden, dass er platz- und gewichtssparender und mit einem höheren Wirkungsgrad ausgebildet werden kann.

Diese Aufgabe wird erfindungsgemäß durch die Merkmale in Anspruch 1 gelöst.

Bei im wesentlichen gleichen Leistungs- und Drehzahlwerten zwischen aus dem Stand der Technik bekannten Pod-Schiffsantrieben und dem erfindungsgemäßen Schiffsantrieb läßt sich das Verhältnis zwischen dem Durchmesser des Motorgehäuses und dem Propelleraußendurchmesser im Falle des erfindungsgemäßen Schiffsantriebs auf 30 % im Vergleich zu 35 bis 40 % beim Stand der Technik reduzieren. Im Vergleich zu aus dem Stand der Technik bekannten Schiffsantrieben, die insgesamt z.B. ein Gewicht von ca. 310 t aufweisen, läßt sich dieses Gewicht im Falle des erfindungsgemäßen Schiffsantriebs auf 100 bis 200 t reduzieren. Darüber hinaus kann der Wirkungsgrad des Elektromotors des erfindungsgemäßen Schiffsantriebs auf 99 % im Vergleich zu 97,5 % bei aus dem Stand der Technik bekannten Schiffsantrieben erhöht werden. Die erheblichen Reduzierungen hinsichtlich des Bauvolumens und des Gesamtgewichts, die etwa im Faktor 2 oder größer auftreten, führen dazu, dass entweder der nutzbare Raum des Schiffsrumpfs erhöht wird oder dass der Schiffsrumpf bei gleichgroßem nutzbarem Raum kleiner ausgeführt werden kann. Die Maschinenfundamente können weniger aufwendig gestaltet werden, woraus sich erhebliche wirtschaftliche Vorteile ergeben. Aufgrund der leistungslosen Erregung ist der Wirkungsgrad höher und der Kühlaufwand reduziert.

Gemäß einer vorteilhaften Ausführungsform des erfindungsgemäßen Schiffsantriebs weist bzw. weisen der zumindest eine als Drehstrom-Synchronmaschine ausgebildete Elektromotor und/oder der zumindest eine als Drehstrom-Synchronmaschine ausgebildete Generator der Stromversorgung eine Luftspalt-Drehstromwicklung aus Kupfer-Bündelleiter auf, die in einem Ringspalt zwischen einem Rotor und einem geblechten magnetischen Eisenjoch angeordnet ist. Bei dieser Ständer-Luftspaltwicklung sind keine Eisenzähne als Quelle von Nutungsgeräuschen vorgesehen, so dass die Elektromotoren und die Generatoren ruhiger laufen. Aufgrund des geringeren Rotorgewichts sind die auftretenden Vibrationen erheblich reduziert. Aufgrund der kleinen synchronen Reaktanz ergibt sich ein sehr hohes Kurzzeit-Drehmoment bzw. Kippmoment. Zwischen dem Rotor und dem Ständer ist ein im Vergleich zum Stand der Technik großer Luftspalt von 5 bis 50 mm zulässig. Die Montage ist erheblich vereinfacht, da höhere Toleranzen bezüglich der Wellendurchbiegung, der Verwindungen durch Schiffspropellerkräfte etc. zulässig sind.

Als besonders vorteilhaft hat es sich herausgestellt, wenn der HTSL-Draht der rotierenden Erregerwicklung aus Multifilament-Bandleitern Bi2 Ba2 Sr2 Cu3 Ox oder Bi2 Ba2 SrCu2 Ox in einer Silber- oder Ag-Legierungsmatrix, aus YBa2 Cu3 Ox als Dünnfilm auf Stahlband, Nickelband, Band aus einer Nickel enthaltenden Legierung oder Silberband oder aus MgB₂-Supraleiter ausgebildet ist.

Um in HTSL-Bauart ausgebildete Elektromotoren mit möglichst geringem Außendurchmesser zu erzielen ist es zweckmäßig, wenn der die rotierende Erregerwicklung aus HTSL-Draht aufweisende Rotor des als Drehstrom-Synchronmaschine ausgebildeten zumindest einen Elektromotors bzw. Generators 6 bis 12, vorzugsweise 8polig ausgebildet ist.

Gemäß einer Weiterbildung des erfindungsgemäßen Schiffsantriebs ist jeder Kryostat durch einen Kältemittelkreislauf mit Kältemittel versorgbar.

Zur Erhöhung der Betriebssicherheit der Kühlvorrichtung kann vorteilhaft jeder Kryostat durch zumindest zwei redundante Kältemittelkreisläufe mit Kühlmittel versorgt werden.

Zweckmäßigerweise ist als Kältemittel im Kältemittelkreislauf zwischen einem Kaltkopf und einer Transferkupplung zum Kryostaten kaltes Helium- oder Wasserstoffgas vorgesehen.

Alternativ kann der Kältemittelkreislauf zwischen einem Kaltkopf und einer-Transferkupplung zum Kryostaten im Kryo-Heatpipe-Prinzip ausgebildet sein, wobei dann der Transferkupplung flüssiges Kältemittel, wie flüssiges Neon, flüssiger Wasserstoff, flüssiger Stickstoff oder flüssiges Gasgemisch zugeführt und zum Kaltkopf verdampftes Kältemittel rückgeführt wird.

In einfacher Weise läßt sich der Kaltkopf jedes Kältemittelkreislaufs mittels eines rückgekühlten Druckgaskreislaufs betreiben.

Die Rückkühlung des Druckgaskreislaufs des Kaltkopfs wiederum kann mittels einer zentralen Kühlwasserversorgung, Seewasser oder indirekt durch eine Wärmetauscheinrichtung, die ihrerseits in thermischer Verbindung mit seewasserumspülten Schiffsaußenflächen ist, realisiert sein.

Wenn der erfindungsgemäße Schiffsantrieb als Podantrieb ausgebildet ist, wobei der zumindest eine als Drehstrom-Synchronmaschine ausgebildete und die rotierende Erregerwicklung aus HTSL-Draht aufweisende Elektromotor in einer außerhalb eines Schiffsrumpfs angeordneten Motorgondel untergebracht ist, kann durch die hierbei erzielbare hohe Leistungsdichte der Außendurchmesser des zumindest einen Elektromotors niedriger als 32 % des Außendurchmessers des Schiffspropellers betragen. Hierdurch wird der hydraulische Wirkungsgrad des erfindungsgemäß ausgestalteten Podantriebs im Vergleich zum Stand der Technik erheblich erhöht.

Sofern der Kaltkopf jedes Kältemittelkreislaufs in einem drehbaren Azimuthmodul des Podantriebs angeordnet ist, ist dieser leicht zugänglich, wobei darüber hinaus Drehkupplungen entfallen können.

Alternativ kann der Kaltkopf jedes Kältemittelkreislaufs in einem Strutmodul des Podantriebs angeordnet werden, wobei auch dann eine leichte Zugänglichkeit und Wartungsfreundlichkeit der Kühlanlage erreicht werden kann.

Des weiteren ist es bei entsprechenden Anforderungen möglich, dass der Kaltkopf jedes Kältemittelkreislaufs nahe der Transferkupplung, über die Kältemittel in den die rotierende Erregerwicklung aus HTSL-Draht aufnehmenden Kryostaten einleitbar ist, in der Motorgondel des Podantriebs angeordnet wird.

Eine weitere Erhöhung der Zugänglichkeit und damit der Wartungsfreundlichkeit der Kühlvorrichtung wird erzielt, wenn der Druckgaskreislauf samt dem Kaltkopf auf bzw. innerhalb des drehbaren Azimuthmoduls des Podantriebs angeordnet ist.

Die Betriebssicherheit des wie vorstehend beschrieben gestalteten Podantriebs läßt sich erhöhen, wenn der Kryostat des einzigen in der Motorgondel des Podantriebs angeordneten Elektromotors durch zwei Kältemittelkreisläufe mit Kältemittel versorgbar ist, denen jeweils ein Kaltkopf zugeordnet ist. Diese beiden wie vorstehend beschrieben gestalteten Kältemittelkreisläufe sind dann hinsichtlich der Kühlung des Kryostaten zueinander redundant.

Wenn an der Motorgondel des Podantriebs zwei gleich- oder gegenläufige Schiffspropeller vorgesehen sind, denen jeweils einer von zwei in der Motorgondel angeordneten unabhängigen Elektromotoren zugeordnet ist, deren beide Rotoren in jeweils einem Kryostaten angeordnet sind, läßt sich vorteilhaft eine höhere Redundanz bei gleichem Volumen wie bei aus dem Stand der Technik bekannten Podantrieben erreichen, wobei aufgrund der Möglichkeit der Gegenläufigkeit der beiden Schiffspropeller ein höherer hydrodynamischer Wirkungsgrad erzielt werden kann.

Um die Betriebssicherheit der beiden in der Motorgondel angeordneten Elektromotoren zu erhöhen ist es vorteilhaft, wenn die beiden Kryostaten über jeweils einen Kältemittelkreislauf an jeweils einen Kaltkopf angeschlossen sind.

Eine Vereinfachung bei der Ausgestaltung der Kühleinrichtung ist möglich, wenn die beiden Kryostaten über jeweils einen Kältemittelkreislauf an einen ihnen gemeinsamen einzigen Kaltkopf angeschlossen sind.

Vorteilhaft ist jedem Kaltkopf jeweils ein Druckgaskreislauf zugeordnet.

Der Druckgaskreislauf kann beispielsweise mittels eines integrierten Seewasserkühlkreislaufs rückgekühlt werden.

Alternativ kann jeder Druckgaskreislauf mittels eines integrierten Frischwasserkreislaufs rückgekühlt werden, wobei zur Wärmeübertragung aus dem Druckgaskreislauf in den integrierten Frischwasserkreislauf ein Gas-Wasser-Wärmetauscher vorgesehen ist.

Die Wärmeabfuhr aus dem integrierten Frischwasserkreislauf läßt sich in einfacher Weise bewerkstelligen, wenn dieser einen weiteren Wärmetauscher aufweist, mittels dem er in thermischer Verbindung mit Seewasser ist.

In konstruktiv-technisch wenig aufwendiger und dennoch sehr wirksamer Weise läßt sich die Überleitung der Wärmeenergie aus dem integrierten Frischwasserkreislauf ins umgebende Seewasser erreichen, wenn der weitere Wärmetauscher des integrierten Frischwasserkreislaufs nahe der Wandung des Strutmoduls des Podantriebs angeordnet und über diese Wandung mittels Seewasser rückkühlbar ist.

Darüber hinaus kann bei entsprechenden Anforderungen eine Ausgestaltung vorteilhaft sein, bei der jeder Druckgaskreislauf mit einem integrierten Gas-Wasser-Wärmetauscher ausgerüstet ist, der seinerseits nahe der Wandung des Strutmoduls des Podantriebs angeordnet, mit dieser thermisch verbunden und über diese mittels Seewasser kühlbar ist. Hierdurch kann die Wärmemenge aus dem Druckgaskreislauf ohne Zwischenschaltung weiterer Kreisläufe direkt an das Seewasser abgegeben werden.

Bei einer weiteren vorteilhaften Ausführungsform des erfindungsgemäßen Schiffsantriebs sind der bzw. die Kaltköpfe im Strutmodul und der bzw. die Druckgaskreisläufe im oder am drehbaren Azimuthmodul des Podantriebs angeordnet.

Alternativ können der bzw. die Kaltköpfe in der Motorgondel des Podantriebs nahe der bzw. den Transferkupplungen und der bzw. die Druckgaskreisläufe in oder am drehbaren Azimuthmodul des Podantriebs angeordnet werden.

Statt den erfindungsgemäßen Schiffsantrieb als Podantrieb auszugestalten ist es auch möglich, dass der zumindest eine als Drehstrom-Synchronmaschine ausgebildete und die rotierende Erregerwicklung aus HTSL-Draht aufweisende Elektromotor in einem Stevensrohr an einem Schiffsdeck untergebracht ist.

Darüber hinaus kann der zumindest eine als Drehstrom-Synchronmaschine ausgebildete und die rotierende Erregerwicklung aus HTSL-Draht aufweisende Elektromotor als Innenbordmotor angeordnet werden, mittels dem über eine Wellenanlage der ihm zugeordnete Schiffspropeller angetrieben wird.

Die Stromversorgung des Schiffsantriebs kann vorteilhaft durch eine Antriebsmaschine und einen Generator ausgebildet werden, dessen seine rotierende Erregerwicklung aufnehmender Kryostat mit dem Kryostaten des Elektromotors mittels eines beiden Kryostaten gemeinsamen Kältemittelkreislaufs mit Kältemittel versorgbar ist.

Zur Erhöhung der Betriebssicherheit des Schiffsantriebs ist es zweckmäßig, wenn der Kryostat des Generators mit dem Kryostaten des Elektromotors mittels zweier beiden Kryostaten gemeinsamer, zueinander redundanter Kältemittelkreisläufe mit Kältemittel versorgbar ist.

Um in einfacher Weise eine Kältemittelzuführung durch Schwerkraft zu realisieren ist es zweckmäßig, wenn der Kaltkopf jedes Kältemittelkreislaufs in Vertikalrichtung oberhalb des in Vertikalrichtung am höchsten angeordneten, von diesem Kältemittelkreislauf versorgten Kryostaten angeordnet ist.

Gemäß einer weiteren vorteilhaften Ausführungsform der Erfindung ist jeder eine eigene Kältemittelversorgung aufweisende Elektromotor in der Motorgondel des Podantriebs mit einer eigenen Stromversorgung versehen.

Im folgenden wird die Erfindung anhand von Ausführungsformen unter Bezugnahme auf die Zeichnung näher erläutert.

Es zeigen:
- FIGUR 1: eine Querschnittsdarstellung einer ersten Ausführungsform eines als Podantrieb ausgebildeten erfindungsgemäßen Schiffantriebs;
- FIGUR 2: eine Längsschnittdarstellung einer zweiten Ausführungsform des als Podantrieb ausgebildeten erfindungsgemäßen Schiffsantriebs;
- FIGUR 3: eine Längsschnittdarstellung einer dritten Ausführungsform des als Podantrieb ausgebildeten erfindungsgemäßen Schiffsantriebs;
- FIGUR 4: eine Längsschnittdarstellung einer vierten Ausführungsform des als Podantrieb ausgebildeten erfindungsgemäßen Schiffsantriebs;
- FIGUR 5: eine Längsschnittdarstellung einer fünften Ausführungsform des als Podantrieb ausgebildeten erfindungsgemäßen Schiffsantriebs;
- FIGUR 6: eine Längsschnittdarstellung einer sechsten Ausführungsform des als Podantrieb ausgebildeten erfindungsgemäßen Schiffsantriebs;
- FIGUR 7: eine Querschnittsdarstellung der in FIGUR 6 gezeigten sechsten Ausführungsform des als Podantrieb ausgebildeten erfindungsgemäßen Schiffsantriebs;
- FIGUR 8: eine Längsschnittdarstellung eines in einem Stevenrohr an einem Schiffsheck angeordneten erfindungsgemäßen Schiffsantriebs;
- FIGUR 9: eine Längsansicht einer weiteren Ausführungsform des im Stevenrohr am Schiffsheck angeordneten erfindungsgemäßen Schiffsantriebs; und
- FIGUR 10: eine Längsansicht eines mit einem Innenbordmotor ausgerüsteten erfindungsgemäßen Schiffsantriebs.

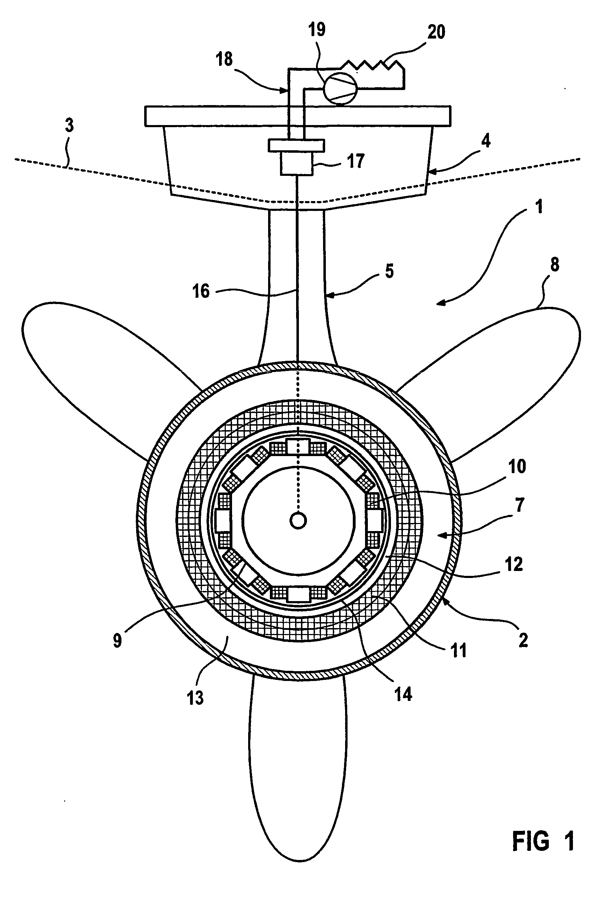

Eine in FIGUR 1 im Querschnitt dargestellte erste Ausführungsform eines als Podantrieb 1 ausgebildeten erfindungsgemäßen Schiffsantriebs hat eine Motorgondel 2, die unterhalb eines Schiffsrumpfs 3, der in den FIGUREN 1 bis 7 gestrichelt und lediglich teilweise dargestellt ist, angeordnet ist.

Innerhalb des Schiffsrumpfs 3 weist der Podantrieb 1 ein Azimuthmodul 4 auf, welches durch den Schiffsrumpf 3 hindurch mittels eines Strutmoduls 5 mit der Motorgondel fest verbunden ist.

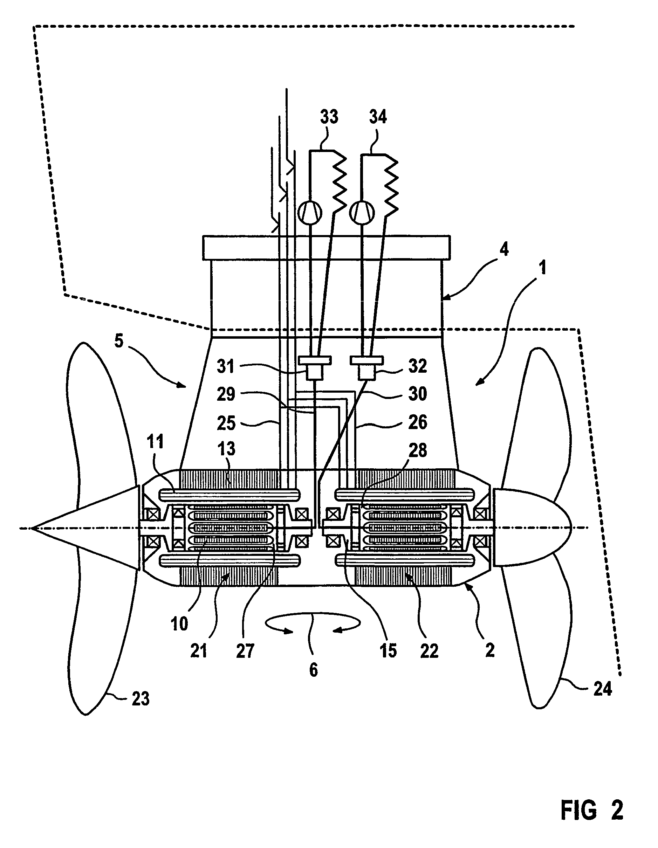

Der Podantrieb 1 ist in Bezug auf den Schiffsrumpf 3 um eine senkrechte Achse drehbar, wie dies aus den Kreispfeilen 6 in den FIGUREN 2 bis 6 hervorgeht.

Der in FIGUR 1 gezeigte Podantrieb 1 hat einen innerhalb der Motorgondel 2 angeordneten Elektromotor 7. Mittels dieses Elektromotors 7 wird ein am hinteren Ende der Motorgondel 2 rotierbar angeordneter Schiffspropeller 8 angetrieben.

Hierzu weist der als Drehstrom-Synchronmaschine ausgebildete Elektromotor 7 einen 8poligen Rotor 9 auf, der mit einer rotierenden Erregerwicklung 10 aus HTSL(Hochtemperatursupraleiter)-Draht ausgerüstet ist.

Dieser HTSL-Draht kann aus Multifilament-Bandleitern Bi₂ Ba2 Sr2 Cu2 Ox oder Bi2 Ba2 Sr Cu2 Ox in einer Silber- oder Ag-Legierungsmatrix, aus YBa2 Cu3 Ox als Dünnfilm - auf Stahl -, Nickel- oder Silberband oder aus MgB2-Supraleiter ausgebildet sein.

Der als Drehstrom-Synchronmaschine ausgebildete Elektromotor 7 hat darüber hinaus eine Luftspalt-Drehstrom- bzw. Ständerwicklung 11 aus Kupfer-Bündelleiter, die in einem Ringspalt 12 zwischen dem mit der rotierenden Erregerwicklung 10 aus HTSL-Draht ausgerüsteten 8poligen Rotor 9 und einem geblechten magnetischen Eisenjoch 13 angeordnet ist.

Der die rotierende Erregerwicklung 10 aus HTSL-Draht aufweisende 8polige Rotor 9 ist innerhalb eines Kryostaten 14 aufgenommen, der vakuumisoliert ausgebildet ist und mittels dem die rotierende Erregerwicklung 10 aus HTSL-Draht auf eine Temperatur von 15 bis 77 K tiefkühlbar ist.

Der Kryostat 14 ist über eine koaxial zur Längsmittelachse des 8poligen Rotors 9 angeordnete Transferkupplung 15 in einen Kältemittelkreislauf 16 einbezogen. In den Kältemittelkreislauf 16 ist ein Kaltkopf 17 integriert, der mittels eines Druckgaskreislaufs 18, zu dem ein Kompressor 19 und ein Gas-Wasser-Wärmetauscher bzw. Kühler 20 gehören, nach dem Gifford-MacMahon,- Stirling- oder Pulsetube-Prinzip gekühlt wird.

Der zwischen dem Kaltkopf 17 einerseits und der rotor- bzw. kryostatseitigen Transferkupplung 15 andererseits vorgesehene Kältemittelkreislauf 16 kann als Kältemittel kaltes Helium- oder Wasserstoffgas führen. Des weiteren kann der Kältemittelkreislauf 16 nach dem Kryo-Heatpipe-Prinzip ausgebildet sein, wobei er dann als flüssiges Kältemittel flüssiges Neon, flüssigen Wasserstoff, flüssigen Stickstoff oder flüssiges Gasgemisch zum Kryostaten 14 bzw. zur Transferkupplung 15 zuführt und verdampftes Neon, verdampften Wasserstoff, verdampften Stickstoff oder verdampftes Gasgemisch vom Kryostaten 14 bzw. von der Transferkupplung 15 zum Kaltkopf 17 zurückführt.

Der Druckgaskreislauf 18 einschließlich des Kaltkopfes 17 sind bei dem in FIGUR 1 dargestellten Ausführungsbeispiel leicht zugänglich auf bzw. innerhalb des drehbaren Azimuthmoduls 4 des Podantriebs 1 untergebracht, wodurch Drehkupplungen entfallen können.

Eine in FIGUR 2 im Längsschnitt gezeigte Ausführungsform des Podantriebs 1 hat zwei voneinander unabhängige Elektromotoren 21, 22, mittels denen zwei am vorderen und hinteren Ende der Motorgondel 2 drehbar gelagerte Schiffspropeller 23, 24 angetrieben werden. Die Schiffspropeller 23, 24 können gegenläufig orientiert sein. In FIGUR 2 sind auch die beiden Drehstromzuleitungen 25, 26 der beiden Elektromotoren 21, 22 gezeigt. Jeder Elektromotor 21, 22 verfügt über einen separaten Kryostaten 27, 28. Über Transferkupplungen 15 ist jeder Kryostat 27, 28 an einen Kältmittelkreislauf 29, 30 angeschlossen, wobei im Kältemittelkreislauf 29 bzw. 30 jeweils ein Kaltkopf 31 bzw. 32 angeordnet sind. Jedem Kaltkopf 31 bzw. 32 wiederum ist ein Druckgaskreislauf 33 bzw. 34 zugeordnet.

Die beiden Druckgaskreisläufe 33, 34 sind im Azimuthmodul 4 und die beiden Kaltköpfe 31, 32 im Strutmodul 5 des Podantriebs 1 angeordnet, so dass sie leicht zugänglich und wartungsfreundlich sind. Durch das Vorhandensein zweier Elektromotoren 21, 22, deren 8polige Rotoren 9 unabhängig voneinander mit Kältemittel versorgt werden, ergibt sich eine im Vergleich zu der Ausführungsform gemäß FIGUR 1 erhöhte Verfügbarkeit des Podantriebs 1.

Die Verfügbarkeit läßt sich steigern, wenn die Stromversorgung für jeden Elektromotor 21, 22 einzeln über jeweils separate Schleifringe bzw. Stromrichter erfolgt. FIGUR 2 zeigt nur eine einfache Stromrichterversorgung, welche beide Elektromotoren 21, 22 zugleich versorgt.

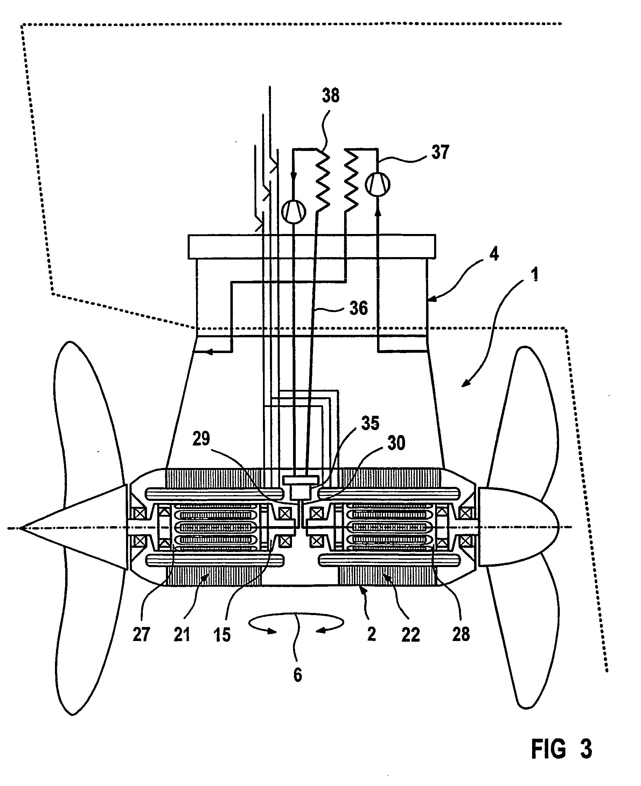

In FIGUR 3 ist eine Abwandlung des in FIGUR 2 gezeigten Podantriebs 1 im Längsschnitt dargestellt, bei der die Kryostaten 27, 28 der beiden Elektromotoren 21, 22 durch die beiden Kältemittelkreisläufe 29, 30 mit Kältemittel versorgt werden. Jedoch sind die beiden Kältemittelkreisläufe 29, 30 im Gegensatz zu FIGUR 2 an einen ihnen gemeinsamen Kaltkopf 35 angeschlossen, der nahe den beiden Transferkupplungen 15 der Kryostaten 27, 29 in der Motorgondel 2 des Podantriebs 1 angeordnet ist.

Der Kaltkopf 35 seinerseits wird durch einen Druckgaskreislauf 36 gekühlt, der mit seinen wesentlichen Bestandteilen im bzw. am Azimuthmodul 4 des Podantriebs 1 angeordnet bzw. angebracht ist.

Die Kühlung des Druckgaskreislaufs 36 erfolgt mittels eines integrierten Seewasserkühlkreislaufs 37, der dem Druckgaskreislauf 36 über eine Wärmetauschereinheit 38 Wärmeenergie entzieht. Auch der integrierte Seewasserkühlkreislauf 37 ist hinsichtlich seiner wesentlichen Bestandteile im bzw. am Azimuthmodul 4 des Podantriebs 1 angeordnet.

Die zur Versorgung der den Kryostaten 27, 28 zugeordneten Kältemittelkreisläufe 29, 30 vorgesehenen Bauteile können zur Erhöhung der Betriebssicherheit im Falle der Ausführungsform gemäß FIGUR 3 auch redundant bzw. doppelt ausgeführt sein.

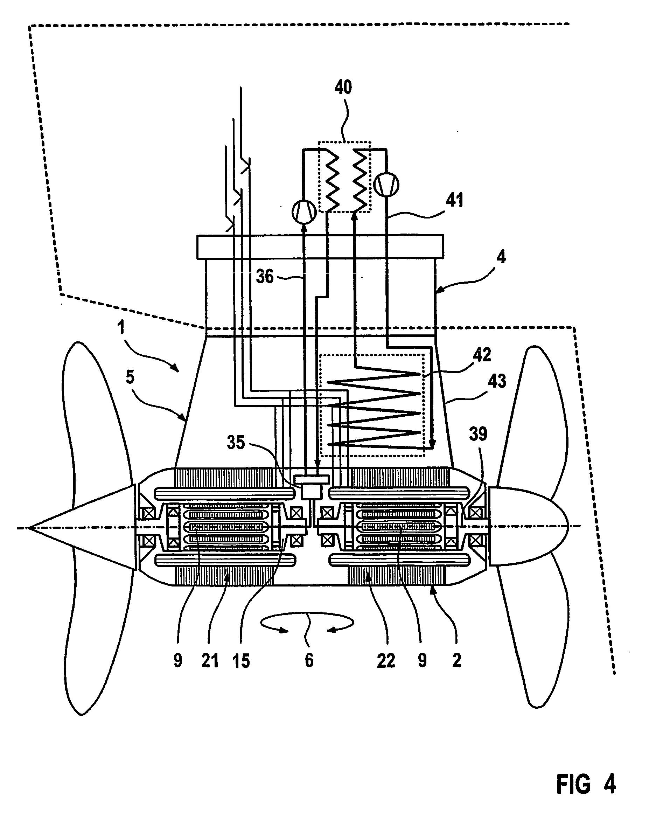

Auch im Falle der in FIGUR 4 gezeigten Ausführungsform des Podantriebs 1 ist der Kaltkopf 35 nahe den koaxial zur Rotorachse 39 der Rotoren 9 der beiden Elektromotoren 21, 22 angeordneten Transferkupplungen 15 in der Motorgondel 2 angeordnet. Die Rückkühlung des dem Kaltkopf 35 zugeordneten Druckgaskreislaufs 36 erfolgt durch einen im Druckgaskreislauf 36 angeordneten Gas-Wasser-Wärmetauscher 40, der auch Bestandteil eines integrierten Frischwasserkreislaufs 41 ist.

Die Kühlung des integrierten Frischwasserkreislaufs 41 erfolgt mittels eines weiteren Wärmetauschers 42, der in thermischer Verbindung mit der Wandung 43 des Strutmoduls 5 des Podantriebs 1 steht. Die Rückkühlung des weiteren Wärmetauschers 42 des integrierten Frischwasserkreislaufs 41 erfolgt somit durch die Wandung 43 des Strutmoduls 5 des Podantriebs 1 hindurch mittels Seewasser.

Die wesentlichen Bestandteile sowohl des Druckgaskreislaufs 36 als auch des integrierten Frischwasserkreislaufs 41 sind servicefreundlich im Azimuthmodul 4 des Podantriebs 1 angeordnet, wohingegen der Kaltkopf 35, wie vorstehend bereits erwähnt, in der Motorgondel 2 des Podantriebs 1 sitzt.

Alternativ können zwei Kaltköpfe 35 vorgesehen sein, von denen jeder einem der beiden Elektromotoren 21, 22 zugeordnet ist und die beide mittels des Druckgaskreislaufs 36 rückgekühlt werden können.

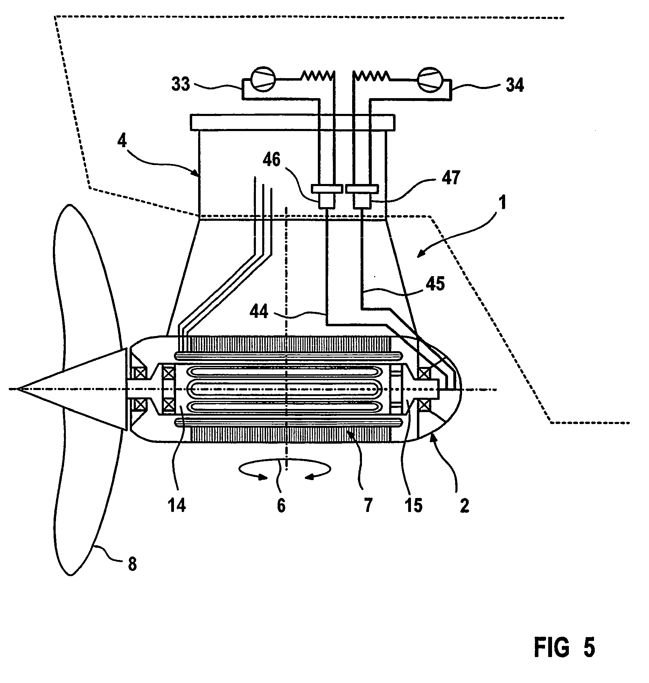

Der in FIGUR 5 gezeigte Podantrieb 1 weist einen Elektromotor 7 auf, der den einzigen Schiffspropeller 8 des Podantriebs 1 antreibt und nahezu den gesamten einen konstanten Durchmesser aufweisenden Innenraum der Motorgondel 2 des Podantriebs 1 einnimmt. Im Vergleich zu den mit zwei Elektromotoren ausgerüsteten Podantrieben gemäß den FIGUREN 2 bis 4 wird im Falle der Ausführungsform gemäß FIGUR 5 die Länge der Motorgondel 2 zur Installierung einer höheren Motorleistung besser ausgenutzt.

Der Kryostat 14 des Elektromotors 7 ist mittels der Transferkupplung 15 an zwei im Kryo-Heatpipe-Prinzip ausgebildete Kältemittelkreisläufe 44, 45 angeschlossen, zu denen jeweils ein Kaltkopf 46 bzw. 47 gehört. Die beiden Kaltköpfe 46, 47 sind im Azimuthmodul 4 des Podantriebs angeordnet und werden durch ebenfalls im Azimuthmodul 4 des Podantriebs 1 vorgesehene Druckgaskreisläufe 33, 34 rückgekühlt. Die aufgrund der zweifachen Realisierung der die Kühlung des Elektromotors 7 bewerkstelligenden Bauteile vorliegende Redundanz erhöht die Betriebssicherheit des Podantriebs 1.

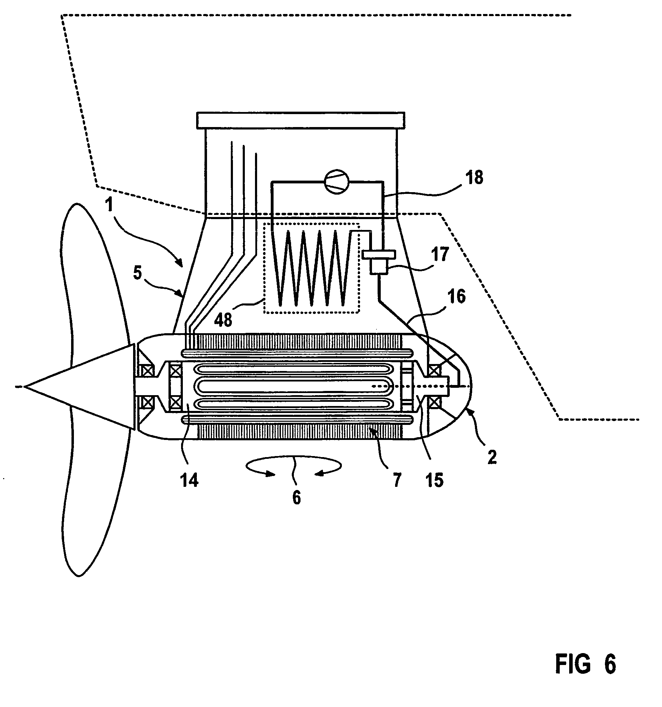

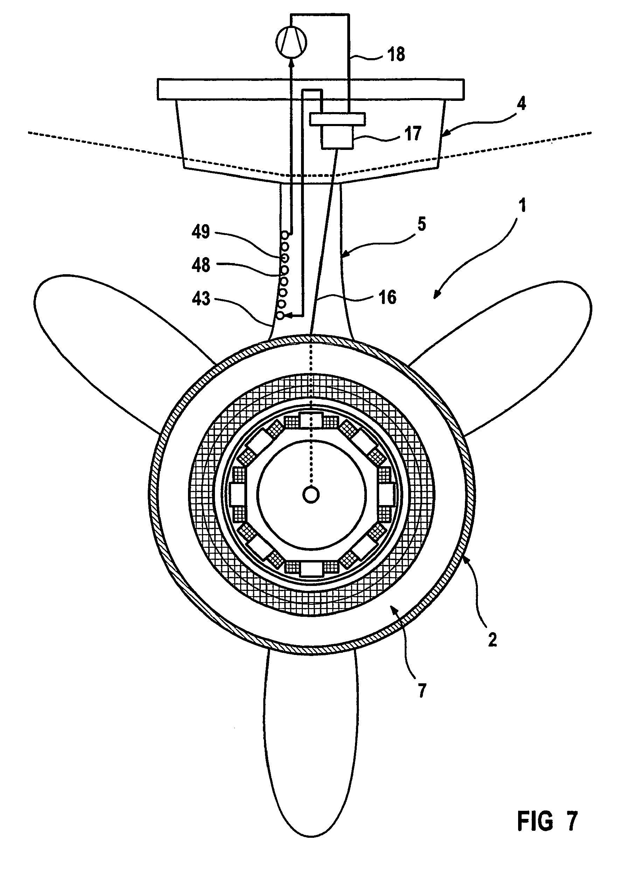

Bei den in den FIGUREN 6 und 7 im Längs- bzw. Querschnitt dargestellten Ausführungsformen des Podantriebs 1 wird der Kryostat 14 des einzigen in der Motorgondel 2 angeordneten Elektromotors 7 durch die Transferkupplung 15 von einem Kältemittelkreislauf 16 mit Kältemittel versorgt. Der dem Kältemittelkreislauf 16 zugeordnete Kaltkopf 17 ist im Falle der Ausführungsform gemäß FIGUR 6 im Strutmodul 5, im Falle der Ausführungsform gemäß FIGUR 7 im Azimuthmodul 4 des Podantriebs 1 angeordnet. Bei beiden Ausführungsformen wird der Kaltkopf 17 mittels eines Druckgaskreislaufs 18 rückgekühlt, wobei diesem Druckgaskreislauf 18 mittels eines integrierten Gas-Wasser-Wärmetauschers 48 Wärme entzogen wird. Dieser Gas-Wasser-Wärmetauscher 48 ist an der Wandung 43 des Strutmoduls 5 angeordnet, wie sich insbesondere aus FIGUR 7 ergibt. Entsprechend ist dieser Gas-Wasser-Wärmetauscher 48 in wärmeleitender Verbindung mit der Wandung 43 des Strutmoduls 5 und damit mit dem das Strutmodul 5 umgebenden Seewasser. Bei den Ausführungsformen gemäß FIGUR 6 und FIGUR 7 wird der Druckgaskreislauf unmittelbar durch das Seewasser rückgekühlt, wobei die Wärmetauscher-Rohrschlangen 49 des Gas-Wasser-Wärmetauschers 48 direkt an der Wandung 43 des Strutmoduls 5 angeordnet werden können.

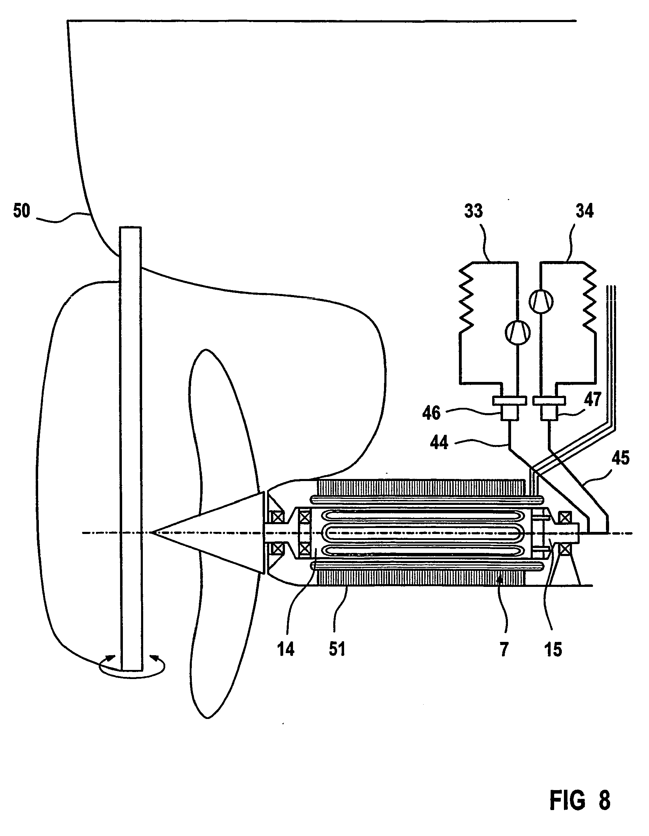

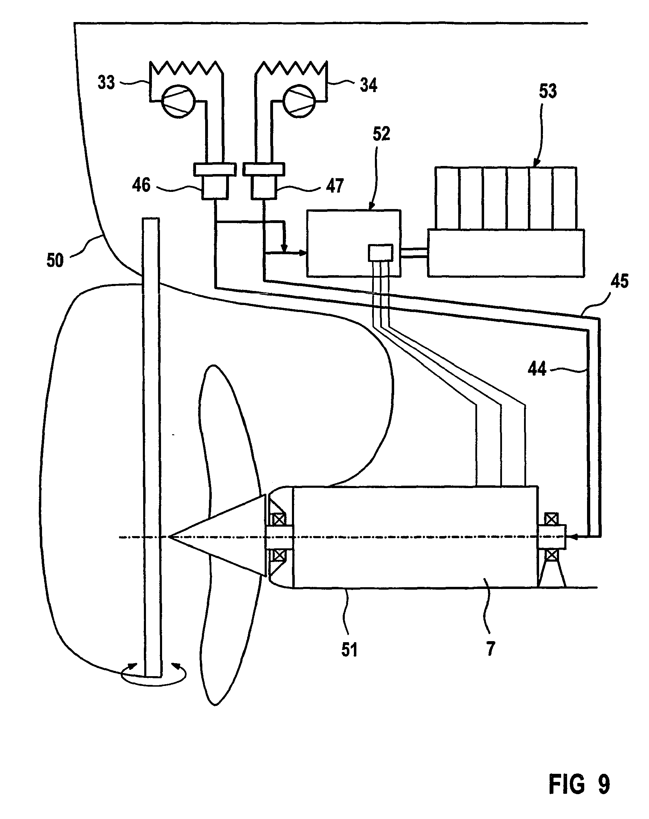

Bei den Ausführungsformen gemäß den FIGUREN 8 und 9 ist ein Elektromotor 7 des Schiffsantriebs in einem am Schiffsheck 50 ausgebildeten Stevensrohr 51 fest angeordnet. Der Kryostat 14 des Elektromotors 7 ist durch die Transferkupplung 15 an zwei Kältemittelkreisläufe 44, 45 angeschlossen, die jeweils einen Kaltkopf 46, 47 aufweisen. Die beiden Kaltköpfe 46, 47 werden jeweils durch einen Druckgaskreislauf 33, 34 rückgekühlt. Somit erfolgt die Kühlung des Kryostaten 14 des Elektromotors 7 in redundanter Weise.

In FIGUR 9 ist neben dem Elektromotor 7 des Schiffsantriebs auch eine Energiererzeugungsanlage mit einem Generator 52 dargestellt, der durch eine als Verbrennungskraftmaschine 53 ausgebildete Antriebsmaschine angetrieben wird.

Der Generator 52 weist einen in den FIGUREN nicht im einzelnen dargestellten Rotor mit rotierender Erregerwicklung aus HTSL-Draht auf, wobei der Kryostat des Generators 52 in redundanter Weise sowohl durch den Kältemittelkreislauf 44 als auch den Kältemittelkreislauf 45 mit Kältemittel versorgt wird, wie sich aus FIGUR 9 ergibt. Alternativ ist es möglich, die Versorgung des Generators 52 und des Elektromotors 7 mittels eines einzigen Kältemittelkreislaufs und der dazugehörigen Anlagenteile zu bewerkstelligen.

Die in FIGUR 9 gezeigten Kaltköpfe 46, 47 sind auf einem höheren Deck als der am höchsten angeordnete Verbraucher angeordnet, so dass die Kältemittelführung durch Schwerkraft über die im Kryo-Heatpipe-Prinzip ausgebildeten Kältemittelkreisläufe 44, 45 erfolgen kann.

Alternativ können die Kältemittelkreisläufe 44, 45 auch durch getrennte Flüssigkeits- und Kaltgasleitungen realisiert sein.

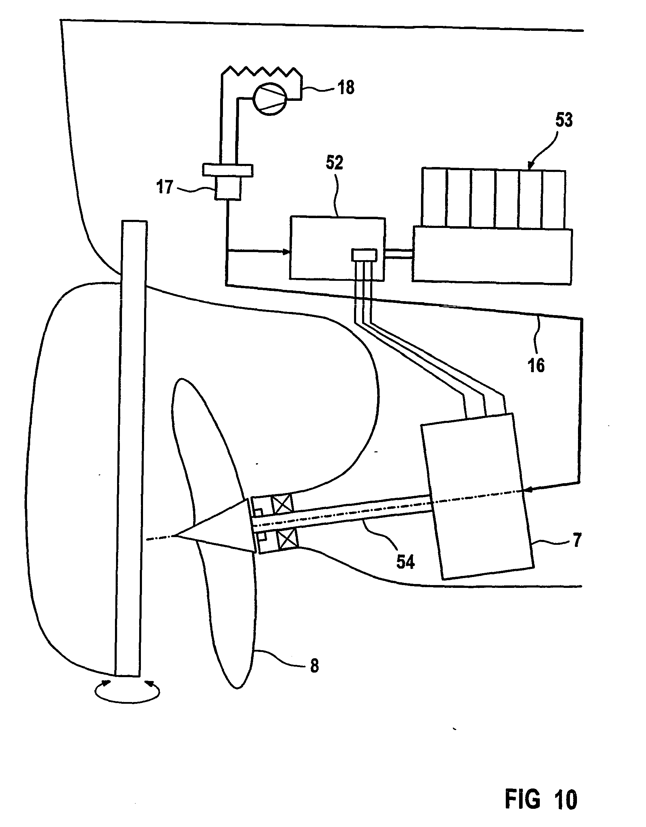

Bei der in FIGUR 10 dargestellten Ausführungsform des erfindungsgemäßen Schiffsantriebs ist der Elektromotor 7 als Innenbordmotor ausgebildet, wobei er ausgangsseitig eine Wellenanlage 54 antreibt, die ihrerseits den Schiffspropeller 8 dreht.

Als Antriebsmaschine des Schiffsantriebs ist eine Verbrennungskraftmaschine 53 vorgesehen, die den Generator 52 antreibt und als Dieselmotor oder Gasturbine sowie Dampfturbine ausgeführt sein kann.

Der Generator 52 und der Elektromotor 7 weisen jeweils einen Rotor mit rotierender Erregerwicklung aus HTSL-Draht auf. Die beiden Kryostaten des Generators 52 und des Elektromotors 7 werden durch einen Kältemittelkreislauf 16 mit Kältemittel versorgt, wobei der Kaltkopf 17 des Kältemittelkreislaufs 16 durch den Druckgaskreislauf 18 rückgekühlt wird. Der Kaltkopf 17 ist oberhalb des höchsten Kältemittelverbrauchers angeordnet, so daß - wie im Falle der Ausführungsform gemäß FIGUR 9 - die Kältemittelführung durch Schwerkraft erfolgen kann.

Gemäß einem Ausführungsbeispiel eines Podantriebs erreicht eine mit zwei in HTSL-Bauart ausgeführten Elektromotoren ausgerüstete Antriebsstufe eines Podantriebs 1 eine Nennleistung von 20 MW bei 130 rpm. Der zur Verfügung stehende Drehzahlbereich liegt zwischen 70 und 160 rpm. Der Außendurchmesser des Schiffspropellers beträgt 6250 mm. Der Außendurchmesser des Motorgehäuses bzw. der Motorgondel des Podantriebs beträgt 30 % des Außendurchmessers des Schiffspropellers. Die Gesamtlänge des Podantriebs beträgt ca. 11000 mm. Das Schiffspropeller-Drehmoment liegt bei ca. 1480 kNm. Das Gewicht des gesamten Systems beträgt ca. 100 bis 200 t, wobei der Wirkungsgrad der Motorstufe etwa 99 % beträgt.

## Patentansprüche

1. Schiffsantrieb mit zumindest einem Schiffspropeller (8; 23, 24), zumindest einem Elektromotor (7; 21, 22), mittels dem der zumindest eine Schiffspropeller (8; 23, 24) antreibbar ist, und einer umrichtergespeisten Stromversorgung, mittels der der zumindest eine Elektromotor (7; 21, 22) mit elektrischer Energie versorgbar ist und die zumindest eine Antriebsmaschine (53) und zumindest einen davon angetriebenen Generator (52) aufweist, wobei der zumindest eine Elektromotor (7; 21, 22) und der zumindest eine Generator (52) der Stromversorgung als Drehstrom-Synchronmaschinen ausgebildet sind, und wobei der zumindest eine als Drehstrom-Synchronmaschine ausgebildete Elektromotor (7; 21, 22) und/oder der zumindest eine als Drehstrom-Synchronmaschine ausgebildete Generator (52) der Stromversorgung eine rotierende Erregerwicklung (10) aus HTSL(Hochtemperatursupraleiter)-Draht aufweist bzw. aufweisen, und wobei jede rotierende Erregerwicklung (10) aus HTSL-Draht in einem Kryostaten (14; 27, 28) angeordnet ist, der vakuumisoliert ist und mittels dem die rotierende Erregerwicklung (10) aus HTSL-Draht auf eine Temperatur von 15 bis 77 K tiefkühlbar ist, und wobei der zumindest eine als Drehstrom-Synchronmaschine ausgebildete Elektromotor (7; 21, 22) und/oder der zumindest eine als Drehstrom-Synchronmaschine ausgebildete Generator (52) der Stromversorgung eine Luftspalt-Drehstromwicklung (11) aus Kupfer-Bündelleiter aufweist bzw. aufweisen, die in einem Ringspalt (12) zwischen einem Rotor (9) und einem geblechten magnetischen Eisenjoch (13) angeordnet ist, **dadurch gekennzeichnet, dass** der die rotierende Erregerwicklung (10) aus HTSL-Draht aufweisende Rotor des als Drehstrom-Synchronmaschine ausgebildeten zumindest einen Elektromotors (7; 21, 22) bzw. Generators (52) 6 bis 12, vorzugsweise 8polig, ausgebildet ist.

2. Schiffsantrieb nach Anspruch 1, bei dem der HTSL-Draht der rotierenden Erregerwicklung (10) aus Multifilament-Bandleitern Bi2 Ba2 Sr2 Cu3 Ox oder B2 Ba2 SrCu2 Ox in einer Silber- oder Ag-Legierungsmatrix, aus YBa2 Cu3 Ox als Dünnfilm auf Stahlband, Nickelband, Band aus einer Nickel enthaltenden Legierung oder Silberband oder aus MgB₂-Supraleiter ausgebildet ist.

3. Schiffsantrieb nach einem der Ansprüche 1 bis 2, bei dem jeder Kryostat (14; 27, 28) durch einen Kältemittelkreislauf (16; 29, 30; 44, 45) mit Kältemittel versorgbar ist.

4. Schiffsantrieb nach einem der Ansprüche 1 bis 2, bei dem jeder Kryostat (14; 27, 28) durch zumindest zwei redundante Kältemittelkreisläufe (44, 45) mit Kältemittel versorgbar ist.

5. Schiffsantrieb nach Anspruch 3 oder 4, bei dem als Kältemittel im Kältemittelkreislauf (16; 29, 30; 44, 45) zwischen einem Kaltkopf (17; 31, 32; 35; 46, 47) und einer Transferkupplung (15) zum Kryostaten (14; 27, 28) kaltes Helium- oder Wasserstoffgas vorgesehen ist.

6. Schiffsantrieb nach Anspruch 3 oder 4, bei dem der Kältemittelkreislauf (16; 29, 30; 44, 45) zwischen einem Kaltkopf (17; 31, 32; 35; 46, 47) und einer Transferkupplung (15) zum Kryostaten (14; 27, 28) im Kryo-Heatpipe-Prinzip ausgebildet ist, so dass der Transferkupplung (15) flüssiges Kältemittel, wie flüssiges Neon, flüssiger Wasserstoff, flüssiger Stickstoff oder flüssiges Gasgemisch zugeführt und zum Kaltkopf (17; 31, 32; 35; 46, 47) verdampftes Kältemittel rückgeführt wird.

7. Schiffsantrieb nach Anspruch 5 oder 6, bei dem der Kaltkopf (17; 31, 32; 35; 46, 47) jedes Kältemittelkreislaufs (16; 29, 30; 44, 45) mittels eines rückgekühlten Druckgaskreislaufs (8; 33, 34; 36) betreibbar ist.

8. Schiffsantrieb nach Anspruch 7, bei dem die Rückkühlung des Druckgaskreislaufs (18; 33, 34; 36) des Kaltkopfs (17; 31, 32; 35; 46, 47) mittels einer zentralen Kühlwasserversorgung, Seewasser oder indirekt durch eine Wärmetauscheinrichtung, die ihrerseits in thermischer Verbindung mit Seewasser umspülten Schiffsaußenflächen ist, realisiert ist.

9. Schiffsantrieb nach einem der Ansprüche 1 bis 8, der als Podantrieb (1) ausgebildet ist, wobei der zumindest eine als Drehstrom-Synchronmaschine ausgebildete und die rotierende Erregerwicklung (10) aus HTSL-Draht aufweisende Elektromotor (7; 21, 22) in einer außerhalb eines Schiffsrumpfs (3) angeordneten Motorgondel (2) untergebracht ist.

10. Schiffsantrieb nach Anspruch 9, bei dem der Kaltkopf (17; 46, 47) jedes Kältemittelkreislaufs (16; 44, 45) in einem drehbaren Azimuthmodul (4) des Podantriebs (1) angeordnet ist.

11. Schiffsantrieb nach Anspruch 9, bei dem der Kaltkopf (17; 31, 32) jedes Kältemittelkreislaufs (16; 29, 30) in einem Strutmodul (5) des Podantriebs (1) angeordnet ist.

12. Schiffsantrieb nach Anspruch 9, bei dem der Kaltkopf (35) jedes Kältemittelkreislaufs (29, 30) nahe der Transferkupplung (15), über die Kältemittel in den die rotierende Erregerwicklung (10) aus HTSL-Draht aufnehmenden Kryostaten (14; 27, 28) einleitbar ist, in der Motorgondel (2) des Podantriebs (1) angeordnet ist.

13. Schiffsantrieb nach Anspruch 9 oder 10, bei dem der Druckgaskreislauf (18; 33, 34) samt dem Kaltkopf (17; 46, 47) auf bzw. innerhalb des drehbaren Azimuthmoduls (4) des Podantriebs (1) angeordnet ist.

14. Schiffsantrieb nach einem der Ansprüche 9 bis 13, bei dem der Kryostat (14) des einzigen in der Motorgondel (2) des Podantriebs (1) angeordneten Elektromotors (7) durch zwei Kältemittelkreisläufe (44, 45) mit Kältemittel versorgbar ist, denen jeweils ein Kaltkopf (46, 47) zugeordnet ist.

15. Schiffsantrieb nach einem der Ansprüche 9 bis 14, bei dem an der Motorgondel (2) des Podantriebs (1) zwei gleich- oder gegenläufige Schiffspropeller (23, 24) vorgesehen sind, denen jeweils einer von zwei in der Motorgondel (2) angeordneten unabhängigen Elektromotoren (21, 22) zugeordnet ist, deren beide Rotoren (9) in jeweils einem Kryostaten (27, 28) angeordnet sind.

16. Schiffsantrieb nach Anspruch 14, bei dem die beiden Kryostaten (27, 28) über jeweils einen Kältemittelkreislauf (29, 30) an jeweils einen Kaltkopf (31, 32) angeschlossen sind.

17. Schiffsantrieb nach Anspruch 15, bei dem die beiden Kryostaten (27, 28) über jeweils einen Kältemittelkreislauf (29, 30) an einen ihnen gemeinsamen einzigen Kaltkopf (35) angeschlossen sind.

18. Schiffsantrieb nach einem der Ansprüche 5 bis 17, bei dem jedem Kaltkopf (17; 31, 32; 35; 46, 47) jeweils ein Druckgaskreislauf (18; 33, 34; 36) zugeordnet ist.

19. Schiffsantrieb nach einem der Ansprüche 7 bis 18, bei dem jedem Druckgaskreislauf (36) ein integrierter Seewasserkühlkreislauf (37) zugeordnet ist.

20. Schiffsantrieb nach einem der Ansprüche 7 bis 18, bei dem jedem Druckgaskreislauf (36) ein integrierter Frischwasserkreislauf (41) zugeordnet ist, wobei zur Wärmeübertragung aus dem Druckgaskreislauf (36) in den integrierten Frischwasserkreislauf (41) ein Gas-Wasser-Wärmetauscher (40) vorgesehen ist.

21. Schiffsantrieb nach Anspruch 20, bei dem der integrierte Frischwasserkreislauf (41) einen weiteren Wärmetauscher (42) aufweist, mittels dem er in thermischer Verbindung mit Seewasser ist.

22. Schiffsantrieb nach Anspruch 21, bei dem der weitere Wärmetauscher (42) des integrierten Frischwasserkreislaufs (41) nahe der Wandung (43) des Strutmoduls (5) des Podantriebs (1) angeordnet und über diese Wandung (43) mittels Seewasser rückkühlbar ist.

23. Schiffsantrieb nach einem der Ansprüche 9 bis 18, bei dem jeder Druckgaskreislauf (18) einen integrierten Gas-Wasser-Wärmetauscher (48) aufweist, der nahe der Wandung (43) des Strutmoduls (5) des Podantriebs (1) angeordnet, mit dieser thermisch verbunden und über diese mittels Seewasser kühlbar ist.

24. Schiffsantrieb nach einem der Ansprüche 9, 11 oder 14 bis 25, bei dem der bzw. die Kaltköpfe (17; 31, 32) im Strutmodul (5) und der bzw. die Druckgaskreisläufe (18; 33, 34) im oder am drehbaren Azimuthmodul (4) des Podantriebs (1) angeordnet sind.

25. Schiffsantrieb nach einem der Ansprüche 9, 12 oder 14 bis 25, bei dem der bzw. die Kaltköpfe (35) in der Motorgondel (2) des Podantriebs (1) nahe der bzw. den Transferkupplungen (15) und der bzw. die Druckgaskreisläufe (36) in oder am drehbaren Azimuthmodul (4) des Podantriebs angeordnet sind.

26. Schiffsantrieb nach einem der Ansprüche 1 bis 8, bei dem der zumindest eine als Drehstrom-Synchronmaschine ausgebildete und die rotierende Erregerwicklung (10) aus HTSL-Draht aufweisende Elektromotor (7; 21, 22) in einem Stevensrohr (51) an einem Schiffsheck (50) untergebracht ist.

27. Schiffsantrieb nach einem der Ansprüche 1 bis 8, bei dem der zumindest eine als Drehstrom-Synchronmaschine ausgebildete und die rotierende Erregerwicklung (10) HTSL-Draht aufweisende Elektromotor (7; 21, 22) als Innenbordmotor angeordnet ist, mittels dem über eine Wellenanlage (54) der ihm zugeordnete Schiffspropeller (8; 23, 24) antreibbar ist.

28. Schiffsantrieb nach einem der Ansprüche 1 bis 27, bei dem die Stromversorgung des Schiffsantriebs durch eine Kraftmaschine (53) und einen Generator (52) gebildet ist, dessen seine rotierende Erregerwicklung (10) aufnehmender Kryostat mit dem Kryostaten (14) des Elektromotors (7) mittels eines beiden Kryostaten gemeinsamen Kältemittelkreislaufs (16) mit Kältemittel versorgbar ist.

29. Schiffsantrieb nach einem der Ansprüche 1 bis 27, bei dem die Stromversorgung des Schiffsantriebs durch eine Kraftmaschine (53) und einen Generator (52) gebildet ist, dessen seine rotierende Erregerwicklung (10) aufnehmender Kryostat mit dem Kryostaten (14) des Elektromotors (7) mittels zweier beiden Kryostaten gemeinsamer, zueinander redundanter Kältemittelkreisläufe (44, 45) mit Kältemittel versorgbar ist.

30. Schiffsantrieb nach einem der Ansprüche 5 bis 29, bei dem der Kaltkopf (17; 46, 47) jedes Kältemittelkreislaufs (16; 44, 45) in Vertikalrichtung oberhalb des in Vertikalrichtung am höchsten angeordneten Kryostaten angeordnet ist.

31. Schiffsantrieb nach einem der Ansprüche 9 bis 30, bei dem jedem eine eigene Kältemittelversorgung aufweisenden Elektromotor (21, 22) in der Motorgondel (2) des Podantriebs (1) auch eine eigene Stromversrogung zugeordnet ist.

## Claims

1. Marine propulsion system having at least one vessel propeller (8; 23, 24), at least one electric motor (7; 21, 22) by means of which the at least one vessel propeller (8; 23, 24) can be driven, and having a converter-fed electrical power supply, by means of which the at least one electric motor (7; 21, 22) can be supplied with electric power, and which has at least one drive machine (53) and at least one generator (52) which can be driven by it, with the at least one electric motor (7; 21, 22) and the at least one generator (52) for supplying electrical power being in the form of three-phase synchronous machines, and wherein the at least one electric motor (7; 21, 22) (which is in the form of a three-phase synchronous machine) and/or the at least one generator (52) (which is in the form of a three-phase synchronous machine) for supplying electrical power have/has a rotating field winding (10) composed of HTSL (high-temperature superconductor) wire, and wherein each rotating field winding (10) composed of HTSL wire is arranged in a cryostat (14; 27, 28), which is vacuum-insulated and by means of which the rotating field winding (10) composed of HTSL wire can be cryogenically cooled to a temperature between 15 and 77 K, and wherein the at least one electric motor (7; 21, 22) (which is in the form of a three-phase synchronous machine) and/or the at least one generator (52) (which is in the form of a three-phase synchronous machine) for supplying electrical power have/has an air gap three-phase winding (11) composed of loomed copper conductors, which is arranged in an annular gap (12) between a rotor (9) and a laminated magnetic iron yoke (13), and **characterized in that** the rotor, which has the rotating field winding (10) composed of HTSL wire, of the at least one electric motor (7; 21, 22) or generator (52) (which is in the form of a three-phase synchronous machine) has 6 to 12 poles, and preferably 8 poles.

2. Marine propulsion system according to claim 1, in which the HTSL wire of the rotating field winding (10) is formed from multifilament ribbon conductors Bi2 Ba2 Sr2 Cu3 Ox or B2 Ba2 SrCu2 Ox in a silver or silver-alloy matrix, of YBa2 Cu3 Ox as a thin film on steel strip, nickel strip, strip composed of an alloy containing nickel, silver strip or an MgB2 superconductor.

3. Marine propulsion system according to one of claims 1 or 2, in which each cryostat (14; 27, 28) can be supplied with coolant by means of a coolant circuit (16; 29, 30; 44, 45).

4. Marine propulsion system according to one of claims 1 or 2, in which cryostats (14; 27, 28) can be supplied with coolant by means of at least two redundant coolant circuits (44, 45).

5. Marine propulsion system according to claim 3 or 4, in which cold helium or hydrogen gas is provided as the coolant in the coolant circuit (16; 29, 30; 44, 45) between a cold head (17; 31, 32; 35; 46, 47) and a transfer coupling (15) to the cryostat (14; 27, 28).

6. Marine propulsion system according to claim 3 or 4, in which the coolant circuit (16; 29, 30; 44, 45) between a cold head (17; 31, 32; 35; 46, 47) and a transfer coupling (15) to the cryostat (14; 27, 28) is designed on the cryo heatpipe principle, so that the transfer coupling (15) is supplied with liquid coolant, such as liquid neon, liquid hydrogen, liquid nitrogen or a liquefied gas mixture, and vaporized coolant is fed back to the cold head (17; 31, 32; 35; 46, 47).

7. Marine propulsion system according to claim 5 or 6, in which the cold head (17; 31, 32; 35; 46, 47) of each coolant circuit (16; 29, 30; 44, 45) can be operated by means of a closed-cycle compressed-gas circuit (8; 33, 34; 36).

8. Marine propulsion system according to claim 7, in which the compressed-gas circuit (18; 33, 34; 36) for the cold head (17; 31, 32; 35; 46, 47) is cooled down by means of a central cooling water supply, sea water, or indirectly, by means of a heat exchanging device, which is itself thermally connected to outer surfaces of the vessel over which sea water washes.

9. Marine propulsion system according to one of claims 1 to 8, which is in the form of a pod propulsion system (1), with the at least one electric motor (7; 21, 22), which is in the form of a three-phase synchronous machine and has the rotating field winding (10) composed of HTSL wire, is accommodated in a motor gondola (2) which is arranged outside the vessel hull (3).

10. Marine propulsion system according to claim 9, in which the cold head (17; 46, 47) of each coolant circuit (16; 44, 45) is arranged in an azimuth module (4) (which can be rotated) of the pod propulsion system (1).

11. Marine propulsion system according to claim 9, in which the cold head (17; 31, 32) of each coolant circuit (16; 29, 30) is arranged in a strut module (5) of the pod propulsion system (1).

12. Marine propulsion system according to claim 9, in which the cold head (35) of each coolant circuit (29, 30) is arranged in the motor gondola (2) of the pod propulsion system (1) close to the transfer coupling (15) via which coolant can be introduced into the cryostat (14; 27, 28) which holds the rotating field winding (10) composed of HTSL wire.

13. Marine propulsion system according to claim 9 or 10, in which the compressed-gas circuit (18; 33, 34) together with the cold head (17; 46, 47) is arranged on or within the azimuth module (4) (which can be rotated) of the pod propulsion system (1).

14. Marine propulsion system according to one of claims 9 to 13, in which the cryostat (14) of the single electric motor (7) which is arranged in the motor gondola (2) of the pod propulsion system (1) can be supplied with coolant by means of two coolant circuits (44, 45), each of which has an associated cold head (46, 47).

15. Marine propulsion system according to one of claims 9 to 14, in which two co-rotating or contrarotating vessel propellers (23, 24) are arranged on the motor gondola (2) of the pod propulsion system (1), each of which is associated with one of two independent electric motors (21, 22) which are arranged in the motor gondola (2) and whose two rotors (9) are arranged in in each case one cryostat (27, 28).

16. Marine propulsion system according to claim 14, in which the two cryostats (27, 28) are connected to a respective cold head (31, 32) via a respective coolant circuit (29, 30).

17. Marine propulsion system according to claim 15, in which the two cryostats (27, 28) are connected via a respective coolant circuit (29, 30) to a single cold head (35), which is shared by them.

18. Marine propulsion system according to one of claims 5 to 17, in which each cold head (17; 31, 32; 35; 46, 47) is associated with a respective compressed-gas circuit (18; 33, 34; 36).

19. Marine propulsion system according to one of claims 7 to 18, in which each compressed-gas circuit (36) has an associated integrated sea-water cooling circuit (37).

20. Marine propulsion system according to one of claims 7 to 18, in which each compressed-gas circuit (36) has an associated integrated fresh-water circuit (41), with a gas/water heat exchanger (40) being provided in order to transfer heat from the compressed-gas circuit (36) to the integrated fresh-water circuit (41).

21. Marine propulsion system according to claim 20, in which the integrated fresh-water circuit (41) has a further heat exchanger (42), by means of which it is thermally connected to sea water.

22. Marine propulsion system according to claim 21, in which the further heat exchanger (42) of the integrated fresh-water circuit (41) is arranged close to the wall (43) of the strut module (5) of the pod propulsion system (1), and can be cooled down by means of sea water via this wall (43).

23. Marine propulsion system according to one of claims 9 to 18, in which each compressed-gas circuit (18) has an integrated gas/water heat exchanger (48) which is arranged close to the wall (43) of the strut module (5) of the pod propulsion system (1), is thermally connected to the latter, and can be cooled via the latter by means of sea water.

24. Marine propulsion system according to one of claims 9, 11 or 14 to 25, in which the cold head or heads (17; 31, 32) is or are arranged in the strut module (5), and the compressed-gas circuit or circuits (18; 33, 34) is or are arranged in or on the azimuth module (4) (which can be rotated) of the pod propulsion system (1).

25. Marine propulsion system according to one of claims 9, 12 or 14 to 25, in which the cold head or heads (35) is or are arranged in the motor gondola (2) of the pod propulsion system (1) close to the transfer coupling or couplings (15), and the compressed-gas circuit or circuits (36) is or are arranged in or on the azimuth module (4) (which can be rotated) of the pod propulsion system.

26. Marine propulsion system according to one of claims 1 to 8, in which the at least one electric motor (7; 21, 22), which is in the form of a three-phase synchronous machine and has the rotating field winding (10) composed of HTSL wire, is accommodated in a propeller shaft pipe (51) at the stern (50) of the vessel.

27. Marine propulsion system according to one of claims 1 to 8, in which the at least one electric motor (7; 21, 22), which is in the form of a three-phase synchronous machine and has the rotating field winding (10) composed of HTSL wire, is arranged as an in-board motor, by means of which the vessel propeller (8; 23, 24) associated with it can be driven via a shaft system (54).

28. Marine propulsion system according to one of claims 1 to 27, in which the electrical power supply for the marine propulsion system is formed by a power machine (53) and a generator (52), whose cryostat, which holds its rotating field winding (10), together with the cryostat (14) of the electric motor (7) can be supplied with coolant by means of a coolant circuit (16) which is shared by the two cryostats.

29. Marine propulsion system according to one of claims 1 to 27, in which the electrical power supply for the marine propulsion system is formed by a power machine (53) and a generator (52), whose cryostat, which holds its rotating field winding (10), together with the cryostat (14) of the electric motor (7) can be supplied with coolant by means of two coolant circuits (44, 45), which are mutually redundant and are shared by the two cryostats.

30. Marine propulsion system according to one of claims 5 to 29, in which the cold head (17; 46, 47) in each coolant circuit (16; 44, 45) is arranged in the vertical direction above that cryostat which is arranged at the highest point in the vertical direction.

31. Marine propulsion system according to one of claims 9 to 30, in which each electric motor (21, 22), which has its own coolant supply, in the motor gondola (2) of the pod propulsion system (1) also has its own associated electrical power supply.

## Revendications

1. Système de propulsion de navire comportant au moins une hélice de navire (8 ; 23, 4), au moins un moteur électrique (7 ; 21, 22) au moyen duquel l'au moins une hélice de navire (8 ; 23, 4) peut être entraînée, une alimentation en courant à convertisseur au moyen de laquelle l'au moins un moteur électrique (7 ; 21, 22) peut être alimenté en énergie électrique et qui comporte au moins une machine d'entraînement (53) et au moins un générateur (52) entraîné par la machine d'entraînement, l'au moins un moteur électrique (7 ; 21, 22) et l'au moins un générateur (52) de l'alimentation en courant étant constitués en moteur synchrone à courant triphasé, et l'au moins un moteur électrique (7 ; 21, 22) constitué en moteur synchrone à courant triphasé et/ou l'au moins un générateur (52) de l'alimentation en courant, constitué en machine synchrone à courant triphasé, comportant un enroulement d'excitation rotatif (10) constitué par un fil HTSL (Supraconducteur à haute température), chaque enroulement d'excitation rotatif (10) à fil HTSL étant disposé dans un cryostat (14 ; 27, 28) qui est isolé sous vide et au moyen duquel l'enroulement d'excitation rotatif (10) à fil HTSL peut être refroidi à très basse température, de 15 à 77 K,, et l'au moins un moteur électrique (7 ; 21, 22) constitué en moteur synchrone à courant triphasé et/ou l'au moins un générateur (52) de l'alimentation en courant, constitué en moteur synchrone à courant triphasé, comporte un enroulement triphasé à entrefer (11) à conducteurs de cuivre disposés en faisceau, qui est placé dans une fente annulaire (12) ménagée entre un rotor (9) et une culasse en fer feuilleté magnétique (13), **caractérisé en ce que** le rotor, qui comporte l'enroulement d'excitation rotatif (10) à fil HTSL, de l'au moins un moteur électrique (7 ; 21, 22) respectivement générateur (50), est constitué en moteur synchrone à courant triphasé, ayant 6 à 12 pôles, avantageusement 8 pôles.

2. Système de propulsion de navire selon la revendication 1 dans lequel le fil HTSL de l'enroulement d'excitation rotatif (10) est constitué de conducteurs plats multifilament en Bi2 Ba2 Sr2 Cu3 Ox ou B2 Ba2 SrCu2 Ox dans une matrice d'argent ou d'alliage d'argent, en YBa2 Cu3 Ox en couche mince sur un ruban d'acier, un ruban de nickel, un ruban en alliage contenant du nickel ou un ruban d'argent, ou en un supraconducteur MgB2.

3. Système de propulsion de navire selon l'une des revendications 1 à 2, dans lequel chaque cryostat (14 ; 27, 28) peut être alimenté en agent de refroidissement par un circuit fermé d'agent de refroidissement (16 ; 29, 30 ; 44, 45).

4. Système de propulsion de navire selon l'une des revendications 1 à 2, dans lequel chaque cryostat (14 ; 27, 28) peut être alimenté en agent de refroidissement par au moins deux circuits fermés d'agent de refroidissement redondants (44, 45).

5. Système de propulsion de navire selon la revendication 3 ou 4, dans lequel on utilise de l'hélium ou de l'hydrogène gazeux froid comme agent de refroidissement dans le circuit d'agent de refroidissement (16 ; 29, 30 ; 44, 45) entre une tête froide (17 ; 31, 32 ; 35 ; 46, 47) et un coupleur de transfert (15) avec le cryostat (14 ; 27, 28).

6. Système de propulsion de navire selon la revendication 3 ou 4, dans lequel le circuit fermé d'agent de refroidissement (16 ; 29, 30 ; 44, 45) entre une tête froide (17 ; 31, 32 ; 35 ; 46, 47) et un coupleur de transfert (15) avec le cryostat (14 ; 27, 28) est constitué selon le principe du caloduc cryogénique de façon à amener au coupleur de transfert (15) de l'agent de refroidissement liquide, tel que du néon liquide, de l'hydrogène liquide, de l'azote liquide ou un mélange de gaz liquéfié et à ramener à la tête froide (17 ; 31, 32 ; 35 ; 46, 47) un agent de refroidissement évaporé.

7. Système de propulsion de navire selon la revendication 5 ou 6, dans lequel la tête froide (17 ; 31, 32 ; 35 ; 46, 47) de chaque circuit fermé d'agent de refroidissement (16 ; 29, 30 ; 44, 45) peut fonctionner au moyen d'un circuit fermé de gaz comprimé refroidi (8 ; 33, 34 ; 36).

8. Système de propulsion de navire selon la revendication 7, dans lequel le refroidissement du circuit fermé de gaz comprimé (18 ; 33, 34 ; 36) de la tête froide (17 ; 31, 32 ; 35 ; 46, 47) est réalisé par une alimentation en eau froide centralisée, de l'eau de mer ou indirectement par un dispositif à échangeur de chaleur, qui est de son côté en liaison thermique avec des surfaces extérieures du navire baignées d'eau de mer.

9. Système de propulsion de navire selon l'une des revendications 1 à 8, qui est constitué en entraînement à nacelle (1), l'au moins un moteur électrique (7 ; 21, 22) constitué en moteur synchrone à courant triphasé et comportant l'enroulement d'excitation rotatif (10) à fil HTSL étant logé dans une nacelle de moteur (2) placée à l'extérieur de la coque d'un navire (3).

10. Système de propulsion de navire selon la revendication 9, dans lequel la tête froide (17 ; 46, 47) de chaque circuit fermé d'agent de refroidissement (16 ; 44, 45) est placée dans un module azimutal rotatif (4) de l'entraînement à nacelle (1).

11. Système de propulsion de navire selon la revendication 9, dans lequel la tête froide (17 ; 31, 32) de chaque circuit fermé d'agent de refroidissement (16 ; 29, 30) est placée dans un module de support (5) de l'entraînement à nacelle (1).

12. Système de propulsion de navire selon la revendication 9, dans lequel la tête froide (35) de chaque circuit fermé d'agent de refroidissement (29, 30) est placée dans la nacelle de moteur (2) de l'entraînement à nacelle (1) près du coupleur de transfert (15) permettant d'introduire l'agent de refroidissement dans le cryostat (14 ; 27, 28) recevant l'enroulement d'excitation rotatif (10) à fil HTSL.

13. Système de propulsion de navire selon la revendication 9 ou 10, dans lequel le circuit fermé de gaz comprimé (18 ; 33, 34) est placé conjointement avec la tête froide (17 ; 46, 47) sur respectivement à l'intérieur du module azimutal rotatif (4) de l'entraînement à nacelle (1).

14. Système de propulsion de navire selon l'une des revendications 9 à 13, dans lequel le cryostat (14) de l'unique moteur électrique (16) disposé dans la nacelle de moteur (2) de l'entraînement à nacelle (1) peut être alimenté en agent de refroidissement par deux circuits fermés d'agent de refroidissement (44, 45) à chacun desquels est associée une tête froide (46, 47).

15. Système de propulsion de navire selon l'une des revendications 9 à 14, dans lequel il est prévu au niveau de la nacelle de moteur (2) de l'entraînement à nacelle (1) deux hélices de navire (23, 24) qui tournent dans le même sens ou en sens contraire et à chacune desquelles est associé l'un des deux moteurs électriques indépendants (21, 22) qui sont placé dans la nacelle de moteur (2) et dont les deux rotors (9) sont placés chacun dans un cryostat (27, 28).

16. Système de propulsion de navire selon la revendication 14, dans lequel les deux cryostat (27, 28) sont raccordés chacun à une tête froide (31, 32) respectivement par l'intermédiaire d'un circuit fermé d'agent de refroidissement (29, 30).

17. Système de propulsion de navire selon la revendication 15, dans lequel les deux cryostats (27, 28) sont raccordés, respectivement par le biais d'un circuit fermé d'agent de refroidissement (29, 30), à une tête de refroidissement unique (35) qui leur est commune.

18. Système de propulsion de navire selon l'une des revendications 5 à 17, dans lequel un circuit fermé de gaz comprimé (18 ; 33, 34 ; 36) est associé à chaque tête froide (17 ; 31, 32 ; 35 ; 46, 45).

19. Système de propulsion de navire selon l'une des revendications 7 à 18, dans lequel un circuit fermé de refroidissement par eau de mer intégré (37) est associé à chaque circuit fermé de gaz comprimé (36).

20. Système de propulsion de navire selon l'une des revendications 7 à 18, dans lequel un circuit fermé d'eau douce intégré (41) est associé à chaque circuit fermé de gaz comprimé (36), un échangeur de chaleur Gaz/Eau (40) étant prévu pour le transfert de chaleur du circuit fermé de gaz comprimé (36) au circuit fermé d'eau douce intégré (41).

21. Système de propulsion de navire selon la revendication 20, dans lequel le circuit fermé d'eau douce intégré (41) comporte un autre échangeur de chaleur, au moyen duquel il est en liaison thermique avec de l'eau de mer.

22. Système de propulsion de navire selon la revendication 21, dans lequel l'autre échangeur de chaleur (42) du circuit fermé d'eau douce intégré (41) est placé près de la paroi (43) du module de support (5) de l'entraînement à nacelle (1) et peut être refroidi par de l'eau de mer par le biais de cette paroi (43).

23. Système de propulsion de navire selon l'une des revendications 9 à 18, dans lequel chaque circuit fermé de gaz comprimé (18) comporte un échangeur de chaleur Gaz/Eau intégré (48), qui est placé à proximité de la paroi (43) du module de support (5) de l'entraînement à nacelle (1), est relié thermiquement à ladite paroi et peut être refroidi avec de l'eau de mer par le biais de ladite paroi.

24. Système de propulsion selon l'une des revendications 9, 11 ou 14 à 25, dans lequel la tête froide respectivement les têtes froides (17 ; 31, 32) sont placées dans le module de support (5) et le circuit fermé de gaz comprimé respectivement les circuits fermés de gaz comprimé (18 ; 33, 34) sont placés dans ou sur le module azimutal rotatif (4) de l'entraînement à nacelle (1).

25. Système de propulsion de navire selon l'une des revendications 9, 12 ou 14 à 25, dans lequel la tête froide respectivement les têtes froides (35) sont placées dans la nacelle de moteur (2) de l'entraînement à nacelle (1) près du coupleur de transfert respectivement des coupleurs de transfert (15) et le circuit fermé de gaz comprimé respectivement les circuits fermés de gaz comprimé (36) sont placés dans ou sur le module azimutal rotatif (4) de l'entraînement à nacelle.

26. Système de propulsion de navire selon l'une des revendications 1 à 8, dans lequel l'au moins un moteur électrique (7 ; 21, 22), qui comporte un enroulement d'excitation constitué en machine synchrone à courant triphasé et l'enroulement d'excitation rotatif (10) à fil HTSL, est monté dans un tube d'étambot (51) à l'arrière (50) d'un navire.

27. Système de propulsion de navire selon l'une des revendications 1 à 8, dans lequel l'au moins un moteur électrique (7 ; 21, 22), qui comporte un enroulement d'excitation constitué en machine synchrone à courant triphasé et l'enroulement d'excitation rotatif (10) à fil HTSL, est agencé en tant que moteur intérieur qui permet d'entraîner par le biais d'une ligne d'arbre (54) l'hélice de navire (8 ; 23, 24), qui lui est associée.

28. Système de propulsion de navire selon l'une des revendications 1 à 27, dans lequel l'alimentation en courant de l'entraînement du navire est effectué par une machine motrice (53) et un générateur (52) dont le cryostat recevant son enroulement d'excitation rotatif (10) peut être alimenté en agent de refroidissement par le cryostat (14) du moteur électrique (7) par le biais d'un circuit fermé d'agent de refroidissement (16) commun aux deux cryostats.

29. Système de propulsion de navire selon l'une des revendications 1 à 27, dans lequel l'alimentation en courant de l'entraînement du navire est effectué par une machine motrice (53) et un générateur (52) dont le cryostat recevant son enroulement d'excitation rotatif (10) peut être alimenté en agent de refroidissement par le cryostat (14) du moteur électrique (7) par le biais de deux circuits fermés d'agent de refroidissement (44, 45) redondants l'un de l'autre et communs aux deux cryostats.

30. Système de propulsion de navire selon l'une des revendications 5 à 29, dans lequel la tête froide (17 ; 46, 47) de chaque circuit fermé d'agent de refroidissement (16 ; 44, 45) est disposée verticalement au-dessus du cryostat placé verticalement tout en haut.

31. Système de propulsion de navire selon l'une des revendications 9 à 30, dans lequel chaque moteur électrique (21, 22) comporte sa propre alimentation en agent de refroidissement ainsi que sa propre alimentation en courant dans la nacelle de moteur (2) de l'entraînement à nacelle (1).
